# EUROPEAN PATENT SPECIFICATION

(11) **EP 4 170 965 B1**
(45) Date of publication and mention of the grant of the patent: **02.07.2025**
(21) Application number: 22190742.1
(22) Date of filing: 17.08.2022
(51) Int. Cl.: H04L 9/40

(54) **APPLICATION SECURITY THROUGH GLOBAL LOCKOUT AND CAPTURE**
ANWENDUNGSSICHERHEIT DURCH GLOBALE SPERRUNG UND ERFASSUNG
SÉCURITÉ DES APPLICATIONS PAR VERROUILLAGE ET PAR CAPTURE GLOBAUX

(30) Priority: 22.10.2021 US 202117508513
(43) Date of publication of application: 26.04.2023
(73) Proprietor: SAP SE, 69190 Walldorf (DE)
(72) Inventor: HEBERT, Cedric, 69190 Walldorf (DE); SAHIN, Merve, 69190 Walldorf (DE); SANTANA DE OLIVEIRA, Anderson, 69190 Walldorf (DE)
(74) Representative: Müller-Boré & Partner Patentanwälte PartG mbB

(56) References cited:
- US-A1- 2021 067 551
- US-A1- 2021 160 277
- US-B1- 10 320 784

## Description

### BACKGROUND

As reliance on the Internet and software applications has continued to grow, cyber security has also gained in importance. Securing computer systems and applications against attackers employing varying malicious techniques has become a difficult task. In addition to exploiting software bugs and vulnerabilities, some attackers obtain valid credentials for authorized users and use these credentials to gain unauthorized access to applications or computer systems. Sophisticated attackers can also engage in simultaneous attacks from multiple devices. Detecting and managing such unauthorized access is challenging.
Document US 2021/0160277 Al discloses systems, methods, and computer media for securing software applications. The multi-factor fingerprints allow attackers to be distinguished from authorized users and allow different types of attacks to be distinguished. The multi-factor fingerprint can include, for example, a session identifier component, a software information component, and a hardware information component. The different components can be separately compared to components of stored fingerprints to determine whether an application session request is malicious, and if so, what type of attack, such as session cookie theft or a spoofing attack, is occurring. Document US 2021/0067551 Al similarly discloses systems, methods, and computer media for securing software applications. Through the use of an identifier such as a digital fingerprint, application sessions or session requests that use the same credentials can be distinguished, and malicious users can be detected and managed. A request to establish a session with an application can be received. Based on a digital fingerprint associated with the request, it can be determined that although a credential included in the request is valid, the request is unauthorized by comparing the digital fingerprint to known malicious fingerprints. When the fingerprint is found to be malicious, a cloned application session having at least partially fake data can be established instead of the requested application, thus limiting an attacker's access to real application data without revealing to the attacker that the attack has been detected.

### BRIEF DESCRIPTION OF THE DRAWINGS

FIG. 1 illustrates an example method of securing an application using passive fingerprints, active fingerprints, and cookies.
FIG. 2 is an example global application security system.
FIG. 3 illustrates an example method of securing an application in which a request to access an application is identified as malicious based on a passive or active fingerprint associated with the requesting computing device.
FIG. 4 illustrates an example method of securing an application in which pre-authentication interaction between a computing device and an application is identified as malicious, and a passive or active fingerprint marked malicious during the pre-authentication interaction is used to deny a later request for an application session.
FIG. 5 illustrates an example method of managing a user's access to an application based on a cookie associated with the user's request to access an application.
FIG. 6 illustrates an example method of marking a request or session as malicious.
FIG. 7 illustrates an example method of locking a user.
FIGS. 8A-8D illustrate a detailed example of using passive fingerprints, active fingerprints, and cookies to secure an application.
FIGS. 9-11 illustrate example table structures that can be used with the examples shown in FIGS. 1-8D.
FIG. 12 is a diagram illustrating a generalized implementation environment in which some described examples can be implemented.

### DETAILED DESCRIPTION

The invention is defined in the independent claims.

The examples described herein generally secure software applications against unauthorized access through global lockout and capture. By generating a passive fingerprint, an active fingerprint, and a cookie for each request to access an application or establish a session with an application, malicious activity can be identified, and both future attacks from the same attacker and current and future attacks from other attackers can be stopped and/or avoided.

The passive fingerprint represents characteristics of the requester's computing device that are provided with the request and can include information such as source IP address, user agent information (e.g., browser information), operating system information, and/or processor information. The active fingerprint includes at least some (or all) of the information in the passive fingerprint and also includes information that the computing device provides upon request, such as language or display information for the device. The cookie is assigned after the active fingerprint is generated. The passive fingerprint, active fingerprint, and cookie for a request are then associated together (and associated with a user if credentials are provided).

The passive and active fingerprints thus represent a specific computing device being used to access the application, and this information can be used to understand and interpret subsequent requests involving that computing device. For example, if a request to access the application is received with credentials for User A (and passive and active fingerprints are determined) and a later request is received with the same fingerprints but credentials for User B, the second request can be flagged as malicious, as it can be considered unlikely that two different users are logging in from the same physical device. Perhaps more likely is that an attacker is attempting to log in to both user accounts from one device.

Similarly, if a request has been made for which a passive fingerprint, active fingerprint, and cookie have been generated and stored, and a later request is made with the same fingerprints but with a different cookie, the later request (and the passive and active fingerprints) can be flagged as malicious for tampering with the cookie.

When a request is flagged as malicious or malicious activity is detected either pre-authentication or in an application session, all sessions for the user account can be terminated or redirected to secure the application (global lockout), even if nothing malicious has been detected in the other sessions. An allow-list of devices can also be established by a user so that sessions for the allowed device(s) are not terminated. The account of the user can then be locked pending a password reset.

As an example of malicious activity, if a user looks for hidden functions, attempts to modify a session token to become an administrator, attempts to access an administrator page, or takes other actions that are unusual for a typical user, it can be inferred that the session is malicious or unauthorized. In some examples, application sessions are simply terminated, but this can arouse suspicion in attackers, who may simply try again from another machine or with other credentials. As an alternative, current sessions that are already authenticated can be transferred to a cloned application session (also referred to as a honeypot) that appears to the attacker to still be a normal application session but includes at least some fabricated data to prevent any further incursion. It can be beneficial to observe an attacker's activity (while they believe they are undetected) in a cloned application session to see how the attacker is attempting to access data and exploit vulnerabilities.

For new users or new computing devices, a passive fingerprint, an active fingerprint, and a cookie are generated and stored. When the user attempts to access the application again in the future, the value of the cookie is checked to ensure the user is legitimate and has not been marked as malicious. Each request to access an application (e.g., pre-authentication access or a request to establish a session) is evaluated to see if there is an existing cookie. If there is not, passive and active fingerprints and a cookie are generated and associated together.

Passive fingerprints, active fingerprints, and cookies can also be used to detect a variety of other potentially malicious situations. For example, if a pre-authentication attempt is made to access the admin page of an application, the associated passive and active fingerprints (effectively specifying the physical machine) can be marked as malicious. If a later request for a session is made having the same (malicious) fingerprints along with valid credentials, the session request can be denied. Even though the credentials are correct, the fingerprints indicate an attacker. The account associated with the valid credentials can then be locked, and any other current sessions associated with the account can be terminated or redirected to an application clone.

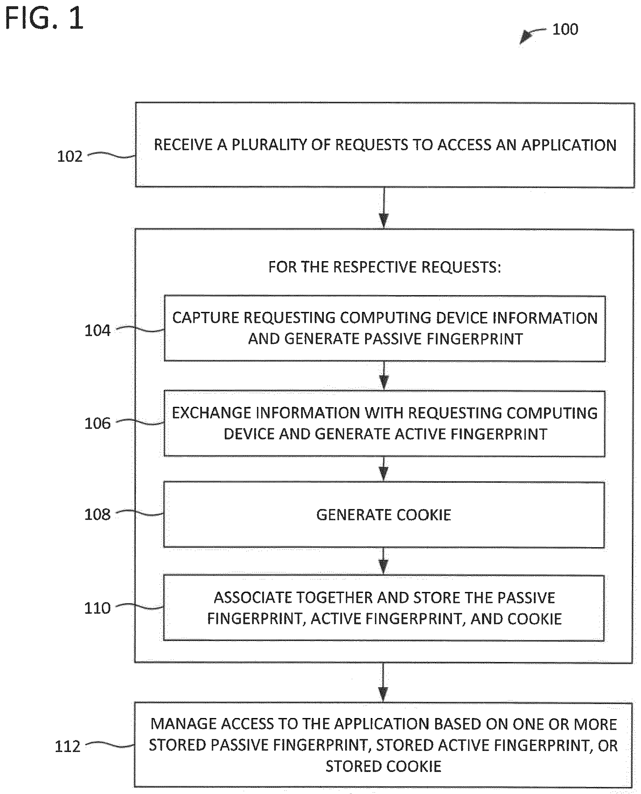

The described approaches are an improvement to cybersecurity and keep data and applications secure from malicious activity while at the same time keeping attackers from discovering that they have been identified. The global lockout mechanism prevents simultaneous attacks from multiple attackers by terminating or redirecting other sessions for a user once the first malicious session or request is identified. Examples are described below with reference to FIGS. 1-12.

FIG. 1 illustrates a method 100 for securing an application. In process block 102, a plurality of requests to access an application are received. At least some of the requests are received from different requesting computing devices. The requests to access the application can be pre-authentication interaction with the application or requests to establish an application session in which credentials are provided. Process blocks 104, 106, 108, and 110 are carried out for the respective requests (i.e., for each request, but the outcome of process blocks 104, 106, 108, and 110 are different for each request).

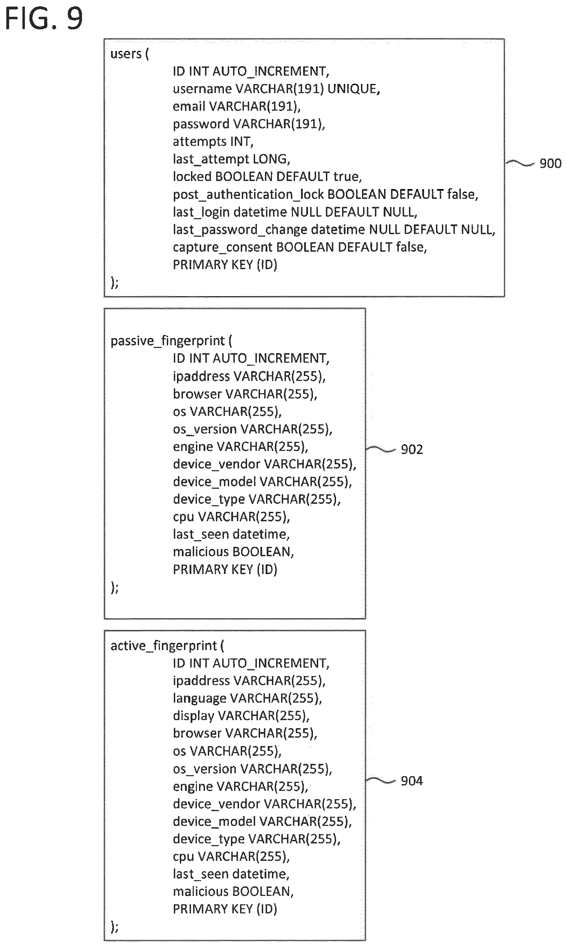

In process block 104, information associated with the requesting computing device is captured and a passive fingerprint is generated based on the captured information. The passive fingerprint represents characteristics of the requester's computing device that are provided with the request and can include information such as source IP address, user agent information (e.g., browser information), operating system information, and/or processor information. An example passive fingerprint is illustrated by reference numeral 902 in FIG. 9.

In process block 106, information is exchanged with the requesting computing device and an active fingerprint is generated based on the exchanged information and the passive fingerprint. The active fingerprint includes at least some (or all) of the information in the passive fingerprint and also includes information that the computing device provides upon request, such as language or display information for the device. The application (directly, or via a reverse proxy, identity provider (IDP), etc.) can send the requesting computing device a script or other request for information that the requesting computing device provides back. An example active fingerprint is illustrated by reference numeral 904 in FIG. 9.

In process block 108, a cookie is generated. The passive fingerprint, active fingerprint, and cookie for the request are then associated together and stored in process block 110. If user credentials were provided in the request, the passive fingerprint, active fingerprint, and cookie are also stored in association with the username or other user identifier in the credentials. In some examples, the cookie is generated for all requests to access the application, even unauthenticated requests. Generating the active fingerprint involves some calculation and resource use, so once a user has an associated cookie, the cookie can be used for identification in place of the active fingerprint.

In process block 112, access to the application is managed based on one or more stored passive fingerprint, stored active fingerprint, or stored cookie. For example, if an additional request is received that includes a cookie having a value that matches a stored cookie access to the application can be allowed for the additional request. If the stored cookie was also associated with a user identifier, and the user identifier in the additional request matches, an application session can be established. Relying on the cookie avoids some false positive attacker detection that can occur from passive fingerprints evolving over time due to browser updates, the user connecting from a public Wi-Fi source, etc. In some examples, the cookie also is checked against the passive fingerprint associated with a request to ensure the cookie has not been stolen.

If the additional request includes a cookie having a value that does not match any of the stored cookies, it can be determined that the additional request is malicious. The cookie, a passive fingerprint associated with the additional request, and an active fingerprint associated with the additional request can then be flagged as malicious, and access to the application can be denied for the additional request.

In some situations, valid credentials are provided in a request along with fingerprints or cookies that are not associated with those credentials, which can indicate the credentials have been compromised. For example, if the additional request includes valid credentials and a cookie that is not recognized, the additional request can be determined to be malicious based on the unrecognized cookie. The cookie and corresponding passive and active fingerprints (or just passive or just active fingerprint) can be marked malicious, and the application account associated with the credentials can be locked. Other current application sessions associated with the locked user can then be terminated or redirected. An allow-list can be established where users specify one or more devices for which they do not want sessions to be terminated or redirected if their account is locked (e.g., a typical home or office computer).

Redirecting a current application session can involve transferring the current application session to a clone application session including at least some alternative data in place of data associated with the application session. The cloned session appears to the attacker to still be the real application session, but access to real data is restricted. The attacker is unaware they have been caught and can be observed. In some examples, if the malicious user has already accessed some data in a previous application session (e.g., before being detected), then that data is included in the cloned session so the malicious user will not realize the session is cloned but the remaining data is fabricated.

If a passive or active fingerprint or cookie has been flagged as malicious and another request to access the application is received that includes the malicious fingerprint or cookie, access can be denied. For unauthenticated users, denial can simply be indicating that the credentials are invalid or that the user's account is locked. If the malicious fingerprint or cookie was previously associated with an authenticated session in which the attacker was transferred to a cloned session, another cloned session can be established instead.

Attacks can also be detected based on the activity of the user. For example, if a honeytoken is interacted with, maliciousness can be inferred. "Honeytokens" are also known as, for example, deceptive elements, detection points, bread crumbs, canaries, or canary tokens. Honeytokens can be files, folders, URLs, options, usernames/passwords (e.g., admin/admin) or other items that a typical user would not interact with and that indicate an attack. Old passwords that were previously used to access an account in an unauthorized manner can also be honeytokens. If a honeytoken is interacted with, the cookie, passive fingerprint, and active fingerprint associated with the interaction (e.g., the current session), can be flagged as malicious.

The account corresponding to the credentials can then be locked, and other current application sessions associated with the account can be terminated or redirected. In this way, if multiple attackers were using the compromised credentials at the same time, one attacker's interaction with a honeytoken can cause all of the attacker's current sessions to be terminated or sent to a cloned session.

Even if an attacker were to clear cookies and try again with different stolen credentials, the passive and active fingerprints would be identified as malicious. A cookie can then be assigned and also marked as malicious. The request can then be denied, or a cloned session can be established.

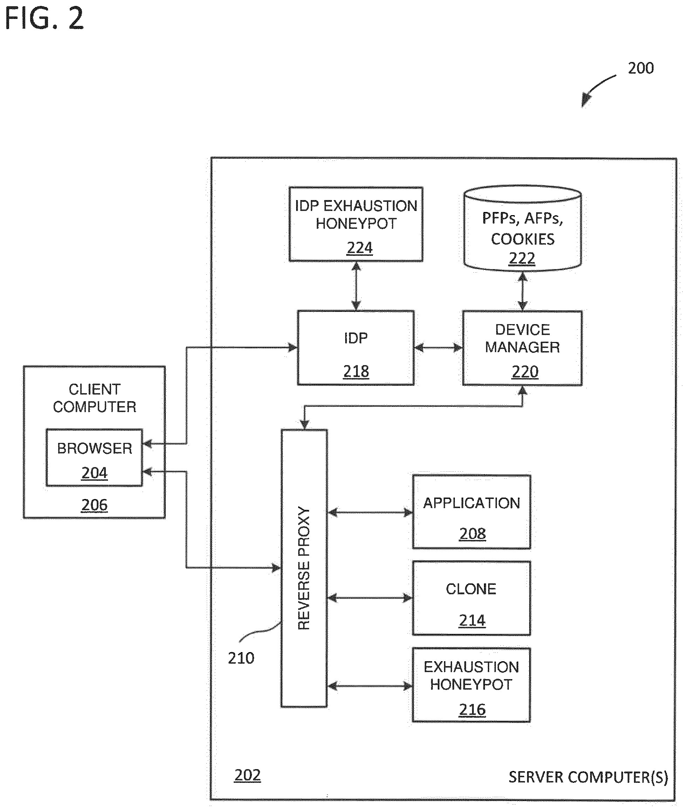

FIG. 2 illustrates a system 200 configured to secure an application using passive fingerprints, active fingerprints, and cookies implemented on one or more server computer(s) 202. Server computer(s) 202 can be, for example, one or more centralized server computers, distributed computers, or a cloud computing system and can include one or more processors and memory.

Browser 204 executing on client computer 206 submits requests to access an application 208. Requests are intercepted by reverse proxy 210. Reverse proxy 210 can be a separate proxy server or proxy functionality implemented on one or more of server computer(s) 202. Application 208 can be a web application accessed through browser 204. The presence of reverse proxy 210 allows decisions to be made (e.g., by reverse proxy 210 or device manager 220) as to whether access will be granted to application 208 or instead to application clone 214 or exhaustion honeypot 216. Exhaustion honeypot 216 can include a copy of the resources of application 208 that can be accessed without authentication. For example, exhaustion honeypot 216 can include a copy of the login page, but because exhaustion honeypot 216 is pre-authentication, all login requests will be denied, and access will not be granted. The term "exhaustion" indicates that exhaustion honeypot 216 is a resource that essentially lets attackers waste time. Exhaustion honeypot 216 can be enriched with deceptive content that makes attackers believe there are vulnerabilities which can be exploited, leading them to waste even more time attacking a resource that is not real. Browser 204, however, is unaware that reverse proxy 210 has intercepted the request.

IDP 218 handles authentication and compares submitted credentials to stored credentials. Device manager 220 can be implemented as a database service accessing stored passive fingerprints, active fingerprints, and cookies in data store 222. When credentials are submitted to IDP 218, IDP 218 can check with device manager 220 (or have device manager 220 retrieve information from data store 222) to verify that the credentials are correct and determine what fingerprints and cookies are associated with the credentials. IDP exhaustion honeypot 224 can be used if IDP 218 detects an attack against itself, such as brute forcing the password reset mechanism. Similar to exhaustion honeypot 216, IDP exhaustion honeypot 224 includes resources to convince an attacker it is the real IDP, but the attacker will only waste time attempting to authenticate. If IDP 218 detects something malicious with a request, IDP 218 can mark the cookie, active fingerprint, and passive fingerprint as malicious similar to how reverse proxy 210 does. Also, if the user enters a honey-password (e.g., an old password prior to reset), IDP 218 can issue a honey session token (e.g., a honey JWT) for application clone 214.

In some examples, reverse proxy 210 compares request fingerprints and cookies to stored fingerprints and cookies in combination with device manager 220, and IDP 218 verifies credentials. In other examples, IDP 218 performs the comparison and device manager 220 provides instructions to reverse proxy 210 regarding establishing an application session or cloned session or sending the requester to exhaustion honeypot 216. In some examples, exhaustion honeypot 216 and/or IDP exhaustion honeypot 224 are omitted.

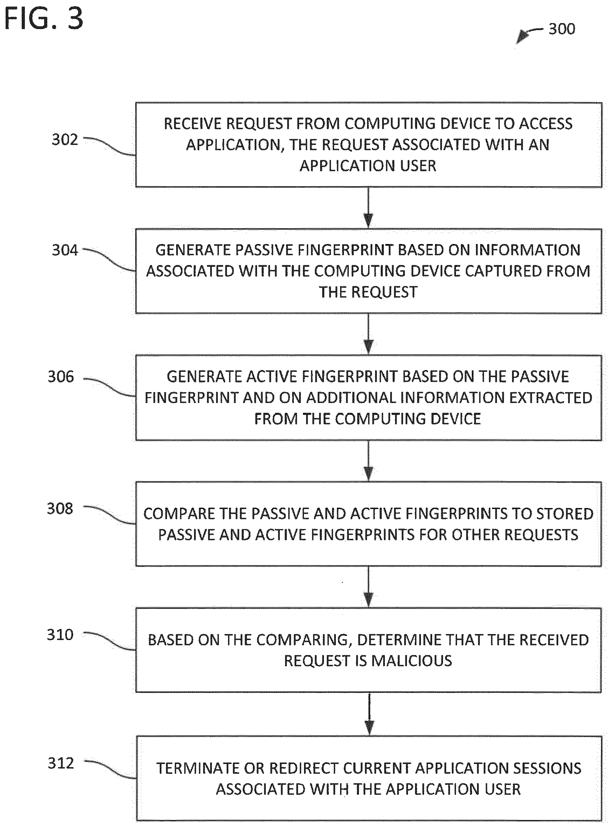

FIG. 3 illustrates a method 300 of securing an application. In process block 302, a request to access an application is received from a computing device. The request is associated with an account of an application user. In process block 304, a passive fingerprint for the request is generated based on information associated with the computing device captured from the request. In process block 306, an active fingerprint for the request is generated based on the passive fingerprint and on additional information extracted from the computing device.

In process block 308, the passive fingerprint and active fingerprint are compared to stored active and passive fingerprints for other requests corresponding to the application user and to other application users. Based on the comparing, in process block 310 it is determined that the received request is malicious. In process block 312, current application sessions associated with the application user are terminated or redirected. In some examples, allow-listed sessions are not terminated or redirected.

The determination of maliciousness in process block 310 can be made for a variety of reasons. For example, the request is malicious if the passive or active fingerprints for the request are already associated with a different application user. As another example, the request can be determined to be malicious if the passive or active fingerprints for the request are already associated with a stored cookie and a different cookie is present in the request.

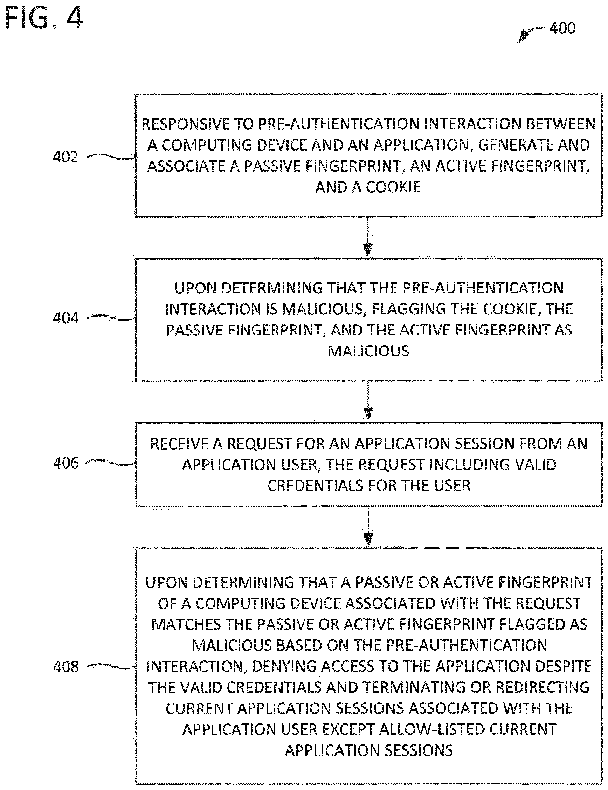

FIG. 4 illustrates a method 400 of securing an application. In process block 402, responsive to pre-authentication interaction between a computing device and an application, a passive fingerprint, an active fingerprint, and a cookie are generated and associated together. The passive fingerprint includes information relating to the computing device automatically provided in the interaction with the application. The active fingerprint includes at least some of the information in the passive fingerprint as well as information requested by the application during the interaction.

Upon determining that the pre-authentication interaction is malicious, the cookie, the passive fingerprint, and the active fingerprint are flagged as malicious in process block 404. In process block 406, a request for an application session is received from an application user. The request includes valid credentials for the application user.

Upon determining that a passive or active fingerprint of a computing device associated with the request matches the passive or active fingerprint flagged as malicious based on the pre-authentication interaction, access to the application is denied in process block 408 despite the valid credentials and current application sessions associated with the application user are terminated or redirected except allow-listed current application sessions.

The examples discussed above with respect to FIGS. 1-4 cover a variety of use cases, as follows.

Pre-Authentication Attack - If a request is detected as suspicious, for example, if it tries to access the folder /admin on an application which has no admin route, it will be marked as malicious. To clear this mark, the attacker will have to delete her cookie. When a request with no cookie is detected, as new cookie will be assigned. But if the fingerprint is known as malicious, the new cookie will also be marked as malicious. So, to really clear the mark, the attacker will need to also change their fingerprint (passive and/or active) manually or to use another device, which is difficult to scale. If a valid authentication request is received from a device marked as malicious, access can be denied (pretend that the password is incorrect) and the user account can be pro-actively locked before harm is done.

Global Diversion Upon Post-Authentication Attack - If an authenticated request is detected as malicious, for example, if it modifies a honeytoken cookie value, it will be marked as malicious, as well as all cookies bound to the same username. This will have the effect to route all current sessions to the honeypot instead of just one. The legitimate user will be caught in the net if he is connected when this happens unless his device was previously allow-listed.

Resource Exhaustion - Since this new mechanism allows for detection of pre-authenticated attacks, an extra honeypot can be added which aims at absorbing pre-authenticated requests and at possibly detecting attacks.

IDP Self-Protection - The forced cookie approach was created primarily protects the target application, but it can also be used to detect, and mark accordingly, attacks against the IDP itself. Such detection won't lead to user trapping (as this could otherwise lock-out users forever) but will help with extra management of pre-authentication attacks.

Device Allow-Listing - Upon user creation / password change / password reset, the user will be asked if they want to exempt their current device from being trapped. This will be recommended if the user connects from his usual device and location. This will have the effect to exempt the user from being sent to the honeypot upon attack detection (his account will still be locked), at the cost of 'freeing' an adversary who manages to spoof the allow-listed device's fingerprint.

Opt-in / Opt-out Mechanism - Users who are uneasy about being sent to a honeypot (and not reassured despite the allow-listing mechanism) will have the possibility to opt-out of the honeypot trapping (this can also be given as a choice so that users opt-in instead of opt-out). For such users, attack detection can lead to session termination and user locking but no to redirection. This means that the adversary will realize she has been detected but the damage will still be prevented.

### Additional Examples

The described examples catch adversaries by using deception. A reverse-proxy is deployed in front of the application to protect and configured to add deceptive elements to the pages sent to the user. If a user interacts with a decoy (honeytoken), the proxy will alert, mark the user session as malicious, and route all subsequent traffic to a honeypot. This can work in complement with an IDP handling user authentication. The proxy and IDP can interact: the proxy can ask the IDP to lock a user, and the IDP can tell the proxy that a logged-in user is in fact an adversary.

In general, when a user tries to use an application, the user is forwarded to the IDP to authenticate. Once authenticated, he can interact with the application. If, while authenticated, he triggers a honeytoken sensor, he will be transparently re-routed to a honeypot clone and the real user account will be locked. The real user will then have the possibility to unlock the account through a reset link sent in an email. After resetting, the new password will give access to the application, and the old password will lead to the clone. Then, all non-authenticated requests will be sent to an exhaustion honeypot. This honeypot can absorb the bulk of automated or handcrafted attacks which do not rely on having a valid user session. If, while interacting with the exhaustion honeypot, the user triggers a honeytoken, all further attempts to log in to the application, even with a valid password, are blocked. The IDP and proxy can just pretend that the credentials are wrong (and ask the user to set another password). Another exhaustion honeypot can be added for the IDP to care for the little attack surface that can be handled there. Such a configuration is shown in system 200 of FIG. 2.

In some examples, this general approach is implemented through JWT session tokens, a cookie named "Verified," and a device fingerprint (e.g., active fingerprint, which includes the information in the passive fingerprint). The JWT session tokens are delivered by the IDP and instruct the proxy to establish a session with the application (if all is fine) or with the honeypot clone (if a leaked password, changed since, was used, e.g.). All requests are forced to have an associated cookie (named "Verified"). If the cookie is deleted or tampered with, the user will be sent back to the login page where another cookie will be assigned. This cookie will be used to consistently send an attacker to the honeypot clone for the duration of his current session. This makes the transition in real time and as invisible as possible. The device fingerprint is composed of relatively stable elements such as the source IP address and the type of browser used, and this is used to mark devices observed acting in a malicious way. This works under the rationale that real users are unlikely to try to cheat with their fingerprint and is useful to consistently keep track of attackers even when they delete their cookies.

Without the device fingerprint, adversaries could become 'clean' by just deleting their cookies. Without the "Verified" cookie, if an adversary spoofs his fingerprint regularly, for example with a user-agent switcher, the attacker could not be correlated across his different requests. With the cookie mechanism, to avoid being tracked, an attacker will have to delete his cookie and change his fingerprint with each request, logging him out systematically, and forcing him to solve multiple CAPTCHAs. Each time the user needs to be assigned a new cookie, the user is asked to solve a CAPTCHA, which slows down attackers who delete their cookies or use other devices. Legitimate users are also prevented from being sent to the honeypot due to having a device detected as malicious. This can happen with adversaries having a similar fingerprint, for example if they attack behind the same VPN and with a machine similar to the real user's machine.

Without the honey-JWT token (JWT token for a cloned application session), adversaries could realize that the user's password was changed and thus try with another user account or start a new phishing attack to get the new password. Both the "Verified" cookie and the device fingerprint can both be marked as malicious. Their combination will have the following influence on the request routing, shown in Table 1, below.

**Table 1 - Routing based on malicious status.**

| **Malicious 'Verified' cookie?** | **Malicious device fingerprint?** | **Routing** | **Comment** |
|---|---|---|---|
| No | No | Application | This is the standard setup if no attack was detected ever. |
| No | Yes | Application | This can happen if an adversary with a similar device was detected. |
| Yes | Yes | Honeypot | This user was detected as an adversary or happened to be connected upon attack detection. |
| Yes | No | Honeypot | This case may happen if an adversary attacked with a device which the user decides to allow-list (because of shared fingerprint). The adversary will be free again if he deletes the cookie, but he may be hesitant to do so. |
| | | | This may also happen with 'dormant' devices (e.g. devices never found malicious and disconnected when an attack was detected from another device). |

The primary means of routing is thus the cookie. The fact that a device is marked as malicious or not will impact new cookie generation: a user deleting his cookie will be assigned a new one. If the request comes from a malicious device, the cookie will be marked as malicious automatically. The only way to clean a device (and thus to get clean cookies again) is to allow-list it. This will be offered only to a user happening to reset his password from a 'malicious' device.

Users can decide to opt-out from the honeypot option, because they might be afraid of the small but non null chance to be sent to a honeypot without realizing (this could happen if an adversary hacks your account and is detected while you are connected). If the user opts-out, this also means that adversaries hacking into said account also won't be sent to a honeypot, but the account will remain protected. The only difference will be that the adversary will know she has been detected and will move to attack from another angle. The device manager is essentially a database service storing the device fingerprints as well as the Verified cookies. It is externalized as both the IDP and the proxy need to interact with these and ensure the information is always up to date.

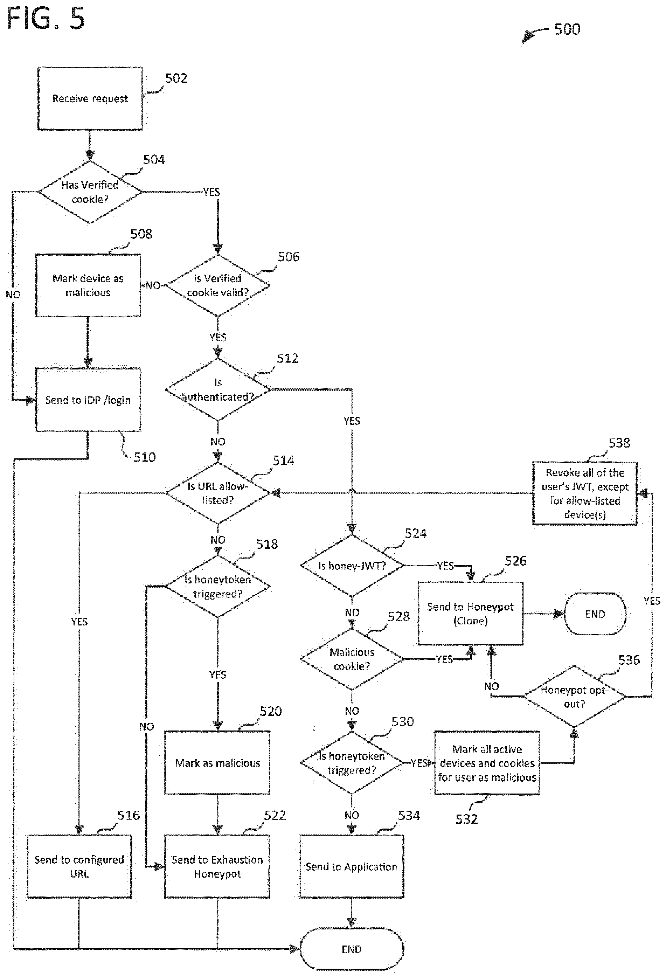

FIG. 5 illustrates an example flow 500 for handling requests. Upon receiving a request in process block 502, it is first checked if there is a known 'Verified' cookie coming with it in decision block 504. If a cookie is identified that is not recognized in decision block 506, it means that the cookie value has been fixed or tampered with, so the device is marked as malicious in process block 508. At this stage, it will be a partial match since only the IP address and the user-agent are available, and active fingerprint information may be unavailable. Nevertheless, all potential matches are marked. In some examples, the cookie is not marked as malicious, because it won't be necessary as the IDP will also check its validity and it can be advantageous not to store user input in the database as this could lead to an exploit (the adversary may set a Verified cookie with a value containing SQL syntax, hoping to trigger an SQL injection).

Either way, the user is forced to visit the /login page of the IDP in process block 510, which will first take its full device fingerprint and assign it a new Verified cookie. Thus, in these examples, the proxy will deal only with requests bound to a Verified cookie, itself attached to a device fingerprint.

Next, it is checked if the request is authenticated in decision block 512. That is, whether the request has a JWT token (JavaScript Object Notation web token - a session token) attached. All non-authenticated requests are routed to the exhaust honeypot, the user should be able to be redirected to the IDP login page, too, as well as access possible resources which do not require authentication. This is managed by having a list of allow-listed URLs such as the / page. This / page of the application can then redirect to the IDP's login page. In all cases, the user is sent to the destination URL configured in the allow-list (likely the / route of the proxy will redirect to /login on the IDP or to / on the application). If the URL is allow-listed in decision block 514, then the user is sent to the configured URL in process block 516.

If no URL is allow-listed in decision block 514, then the home page of the exhaustion honeypot itself can redirect to the IDP's login page. If, however, the exhaustion honeypot is down, no one will be able to login, but the exhaustion honeypot is likely to be more robust than the proxy (or the application).

If a honeytoken is interacted with in decision block 518, then the Verified cookie is marked as malicious in process block 520. This will not catch all attacks but will avoid trapping a user simply because he entered a valid bookmarked URL with a JWT token which just expired.
Furthermore, the exhaustion honeypot may itself support active defense, that is, be able to report to the proxy that it detected an attack. The request is then sent to the exhaustion honeypot in process block 522.

If the request is determined to be authenticated in decision block 512, then it is determined in decision block 524 if a honey-JWT was received, indicating a returning adversary (attacker). If yes, in process block 526, the user can immediately be sent to the honeypot clone. If not, it is determined if the user's Verified cookie is marked as malicious in decision block 528. If the cookie is marked as malicious, it means that an attack was detected while a non-malicious session was ongoing. If yes, the user can again be deflected to the honeypot, as there is a high chance this is one of the attacker's other tools (and a small chance this is one of the real user's devices, if the latter was not allow-listed). Regardless, at that point the user should already have been locked and the real user asked via an email to reset his password.

If the request was not marked as malicious until then but then it is determined in decision block 530 that the request triggers a honeytoken, then all cookies belonging to this user, as well as their devices, can be marked as malicious in process block 532. This can also trigger a user lock (in post-authentication mode). If the request does not trigger a honeytoken, then the user is sent to the application in process block 534.

With this approach, all the active sessions will automatically be re-routed to the honeypot. This may trap the real user if he is also connected at this time, hopefully he will soon see the notification that an attack was detected. As a counterpart to this small risk, all attacker's will now be trapped. Attackers commonly work with several browsers and tools in parallel and possibly in teams. This approach allows for capturing them all at once and prevents them noticing discrepancies between tools.

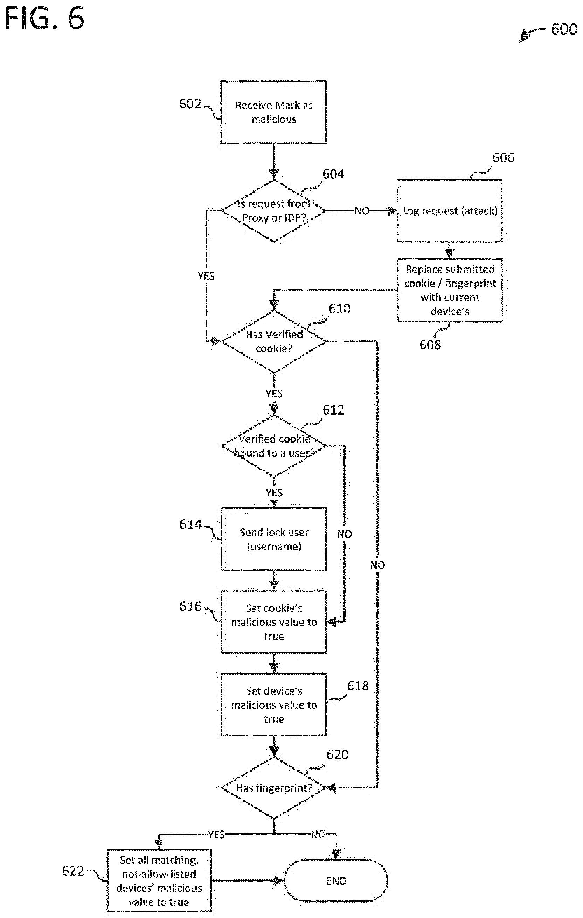

Of course, this is unless the user decided to opt-out of the honeypot as an active defense mechanism. If it is determined in decision block 536 that the user has opted out of the honeypot, a security alert and an alert email are sent to the user instead to notify him that something very wrong happened. The user is then locked, but in "pre-authentication" mode, just to prevent further access with the current password but without triggering the process to create a honey-password (described in more detail in FIG. 6). Furthermore, the adversary will learn which action led to the user locking and thus may be able to avoid this trap next time. Still, all active sessions for this user are terminated in process block 538 (by revoking all JWTs). This means that upon the next request, the user will realize he was disconnected, but this will ensure no one (including the real user) is ever sent to the honeypot.

FIG. 6 illustrates a "mark as malicious" workflow 600. The device manager handles devices and cookies for both the IDP and proxy. The main request to the device manager is to "mark as malicious." A mark as malicious request is received in process block 602. In decision block 604, it is determined whether the request is from the proxy or the IDP.

The request signature is verified. If this fails, the requesting device will be marked as malicious instead of the submitted information which might have been forged, and the attack is logged in process block 606 in the case it's a false positive which needs to be evaluated (for example because the public key expired). The submitted cookie/fingerprint are then replaced with those of the current device in process block 608.

In decision blocks 610 and 612, it is determined whether a cookie was provided or not and if the cookie is bound to a user. If yes, a lock is sent for the username in process block 614 and the cookie and device will get their 'malicious' status set to true in process blocks 616 and 618. If a username was provided, a lock request will be processed, since a cookie with a specified username means the malicious user managed to log into an account at least once and thus know a potentially still valid password.

It is determined in decision block 620 if a fingerprint has been provided. After that, the provided fingerprint (if present) is matched to the list of registered devices. For all matching devices, it is checked if the device is allow-listed for the current username (if provided) or for any username (otherwise). If yes, then this device will be left untouched. All the other matching devices will get their 'malicious' value set to true in process block 622.

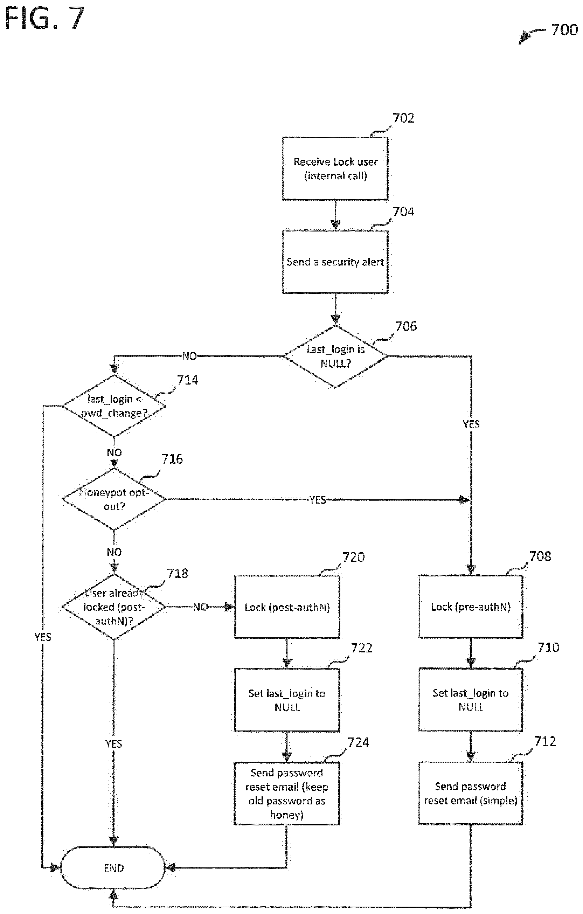

FIG. 7 illustrates an example "receive lock user" internal call workflow 700. The lock user workflow can be managed by the device manager and can be initiated after a device has been marked as malicious. The type of locking mechanism depends on the attack use-case which can be simplified as follows. Consider a simple honeytoken, such as a request to /.git. Any time a request to /.git is received, we know that the user is acting maliciously. The user obtains a fresh cookie and then makes a "GET / .git" request. In this case, since the user never logged in, its cookie will not be assigned any username. Upon triggering the /.git honeytoken, the cookie will be marked as malicious but as per FIG. 6, no user lock request will be triggered. Consider a user obtaining a fresh cookie, logging in as Bob, and then making a "GET / .git" request. In this case, since the user logged in as Bob, its cookie will be assigned the username Bob. Since the user is currently connected as Bob, the lock should be post-authentication, that is, the user should go to the honeypot and upon password reset, Bob's old password should be kept as a honey-password.

Consider a user getting a fresh cookie, making a "GET / .git" request, and then logging in as Bob. In this case, the cookie won't be assigned a username when triggering the honeytoken. However, upon login, since the user is known to be malicious, we can pretend that the password they are using is wrong. A pre-authentication lock will accomplish this.

Consider a user obtaining a fresh cookie, logging in as Bob, logging out, and then making a "GET / .git" request. Here the adversary logged out before being detected, but we know that he managed to log in to the account, so a post-authentication lock is preferred.

Consider a user obtaining a fresh cookie, logging in as Bob, logging out, the user getting locked, and then the user making a "GET / .git" request. Here, the adversary managed to login and logout without being detected, and then the user gets locked due to an attack performed by another adversary. When the honeytoken is triggered, a post-authentication lock is desired. So, a check can made to determine which type of lock is in place. If the account was locked only in pre-authentication mode, it can be upgraded to a post-authentication lock.

Consider a user obtaining a fresh cookie, logging in as Bob, logging out, the password for Bob is changed, then a "GET / .git" request is made. In this case, we know the adversary managed to log in as Bob, but the password was changed afterward. So upon detection time, the cookie is simply marked as malicious and nothing else is done, because the password has already been changed. These example workflows are encompassed by flow 700 of FIG. 7. In addition, a pre-authentication lock is used for users who opt-out of the honeypot.

In process block 702, a lock user call is received. A security alert (e.g., to an administrator) is sent in process block 704. In decision block 706, it is determined if "last_login" is NULL. The "last_login" is the last time the owner of the cookie managed to log in successfully to the application. This value will be NULL if no login ever took place and is reset to NULL upon connecting to a honeypot. If the user never logged in, the value will be NULL, and workflow 700 proceeds to perform a pre-authentication lock in process block 708, reset "last_login" to NULL in process block 710, and send a password reset email in process block 712.

If "last_login" is not NULL, it is compared to "pwd_change," which contains the time when the password was changed for the last time, in decision block 714. This is used to distinguish the case where a post-authentication lock is needed versus not need (because the password the adversary knows is outdated and not dangerous anymore). If "last_login" is after "pwd_change," nothing is done. If not, in decision block 716 it is determined if there is a honeypot opt-out. If so, pre-authentication lock is performed using process blocks 708, 710, and 712. If not, it is determined if the user is already post-authentication locked. If so, no additional action is taken. If not, the user is post-authentication locked in process block 720, "last_login" is set to NULL in process block 722, and a password reset email is sent in process block 724, with the old password being kept as a honey password.

In combination with the IDP, the following situation is also covered. A fresh cookie is obtained, the user logs in as Bob, logs out, and then logs in as Alice. This case means that someone, who successfully connected as Bob, knows Alice's password, or tries to connect as her. In both cases, this means that Bob's password was compromised (as always, assuming the real Bob is not malicious) and his account will be locked depending on the previously mentioned use-cases. But if Alice's password was entered correctly, Alice's account will also be locked (in pre-authentication mode). This is realized by sending two distinct 'mark as malicious' requests at the IDP level, with different usernames bound to the cookie.

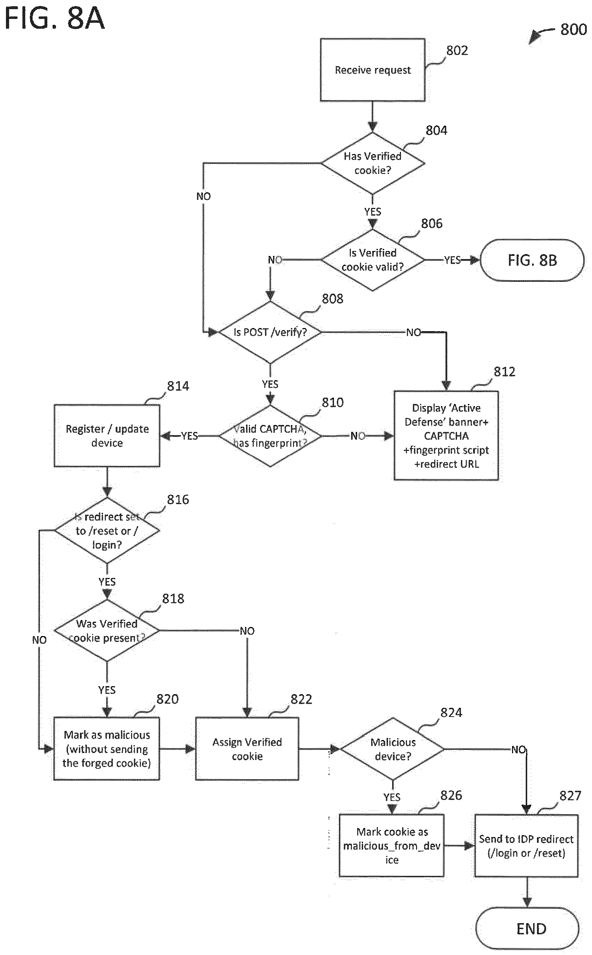

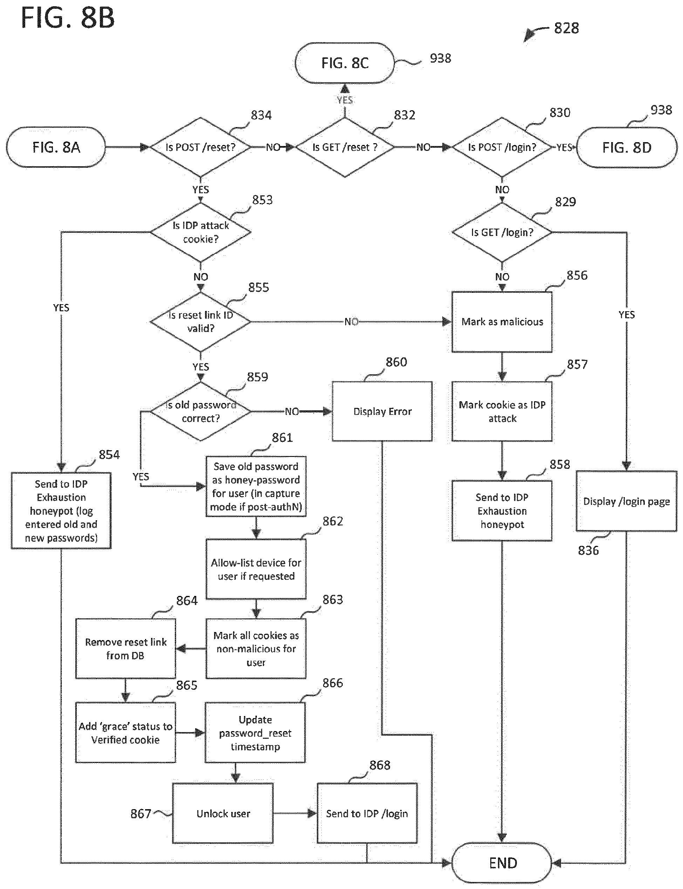

FIGS 8A-8D illustrate a detailed workflow. In first workflow portion 800, a request is received in process block 802. In decision block 804 it is determined if the request has a Verified cookie. It is determined in decision block 806 if the Verified cookie value is valid (which is expected). If there is a valid Verified cookie, workflow 800 proceeds to FIG. 8B. If not valid or if no verified cookie, for example upon its first visit ever, it will be re-routed to a set of actions for creating this cookie. If it is determined that a "POST /verify" is submitted in decision block 808, and then it is determined whether the user has a valid CAPTCHA and fingerprint in decision block 810. If not, the user is asked to solve a CAPTCHA in process block 812. The goal of the CAPTCHA is to make it harder for adversaries to generate a different cookie with each request to cover their tracks. The goal is to discourage attacker use of botnets against the application (since all requests without a cookie requires to solve a CAPTCHA), as well as to encourage them to keep the same cookie for the session duration or longer, which will help correlate pre-authentication attacks with a potential user account compromise (allowing prevention of harm before it is done).

In the reply containing the solved CAPTCHA, the device's fingerprint can be retrieved: IP address, user-agent, and FingerprintJS2 values. The FigerprintJS2 values can be the active fingerprint. Only a few of the FingerprintJS2 retrieved values are used, but the adversary does not need to know that. It is ok if this takes time, as this process should be relatively slow to encourage the user to keep cookies to avoid the process.

The device is registered in process block 814 and 816. The user can first be shown a message on the generated page, explaining that the application is protected with active defense, and that it is in his best interest not to block fingerprinting nor to spoof his user-agent as this will make him harder to distinguish from adversaries. We also say that if he does not delete his cookies, this message will not appear very often. If the user DOES see this page often, he should contact support. This banner further gives the message to would-be attackers that active defense is being used, which has a proven negative impact on their ability to successfully exploit the application.

The IDP then sends the information to the device manager, which will either create a new device (if this device was previously unknown) or just update its "last_seen" value. If the user had a valid Verified cookie, he would not have reached this page, so at this point if there is a Verified cookie attached in decision block 818, it can be determined that the user is malicious. Now that the device fingerprint is known, it can be marked as malicious in process block 820, together with the cookie generated upon device registration. Whether or not the verified cookie was present, the newly generated cookie is assigned to the browser in process block 822. In decision block 824, it is determined whether the device is malicious. If so, the cookie is marked as "malicious_from_device" in process block 826. The browser is then redirected to the proper page through the IDP (/login or /reset) in process block 827. The IDP thus will receive a new GET /login request, but now the user has a Verified cookie. The validity of the cookie is checked. If it is unknown in the database, it means that it has been forged. The path previously explained is then followed for a request with no cookie attached: the user will get a properly generated cookie and the forged one will lead to the device and new cookie to be marked as malicious. At this stage, we are then sure that the request has a valid Verified cookie, possibly marked as malicious.

First workflow portion 800 then continues to FIG. 8B and second workflow portion 828. The target URL is then exampled. The following are expected: GET /login (evaluated in decision block 829), to display the login page; POST /login (evaluated in decision block 830), when the user submits his credentials; GET /reset (evaluated in decision block 832), to display the password reset page after a user was locked; and POST /reset (evaluated in decision block 834), when a user submits a new password to unlock his account.

Anything else will be considered as an attack, as there is no possible use-case to have a bookmark of any other URL against the IDP. When that's the case, the device and cookie are marked as malicious. The cookie is further marked as "attack against the IDP" for special treatment - there are only two ways to attack the IDP, either try forced browsing or try to brute-force the password reset mechanism. Password brute-force on /login is already protected with the "standard" malicious cookie flag, as any discovery of a valid password will be detected and blocked. Forced browsing will simply redirect each time to the IDP exhaustion honeypot, so nothing additional is done.

But the /reset route is special, as it is the only one where a legitimate user could potentially have a malicious Verified cookie, for example if he was connected while an adversary broke into his account and triggered a honeytoken. Thus, this indication can't be relied on to distinguish adversaries from real users. The extra "attack against the IDP" flag allows protection /reset against brute-force. After a preconfigured number of failed attempts, or after forced browsing, the request with this flag will be redirected to an exhaustion honeypot, finalizing the protection.

GET /login is straightforward: if the user has a valid Verified cookie, he can reach the page which will display login and password fields for submission, displayed in process block 836.

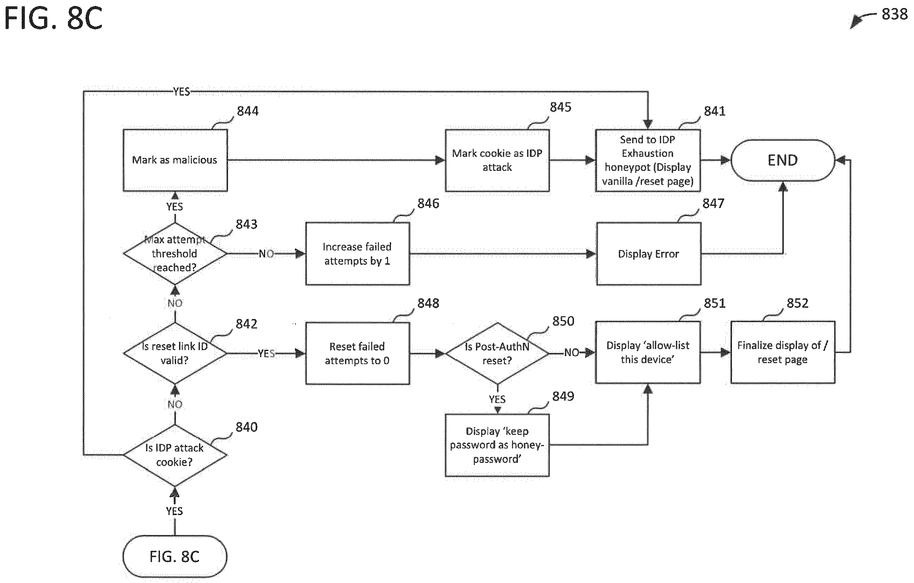

GET /reset is a bit more complex and is described in FIG. 8C by third workflow portion 838. After the user is locked, a unique URL is generated and sent via email to the account owner, something like: https://idp/reset?id=12345678. The user will then click this link or copy-paste it to get a form to reset his password. If it is determined in decision block 840 that the user has a cookie with the flag "IDP attack," the user is routed to the IDP exhaustion honeypot in process block 841. Since the attacker tried to reach a password reset page, the honeypot will display a password reset page to keep the illusion and to keep the attacker wondering whether he successfully brute-forced the ID value or not.

If not an IDP attack cookie, a reset link ID is checked in decision block 842. If not found in the database, it means that it was forged or that it is a failed copy-paste. If the threshold is reached in decision block 843, the device and cookie are marked as malicious in process block 844, the "IDP attack" flag is added in process block 845, and the request is forwarded to the IDP exhaustion honeypot. If not, failed attempts are increased by 1 in process block 846, and an error message is shown in process block 847.

If the reset link ID is ok, the user is assumed to be a genuine user, even if his device or Verified cookie say otherwise. Reset failed attempts are then set to 0 in process block 848.

The following information can then be displayed in process block 849 as explanation to the user based on whether it is a post-authentication reset (as determined in process block 850). If the user was locked pre-authentication, for example because his password was found while brute-forcing, the old password won't be used for routing to the honeypot, but it will still be kept to detect someone trying out this old password. This is referred to as a "non-capture" honey-password. But if the user was locked post-authentication, this means that adversary already know that the password worked (at least once). In this case, the old password will be kept as a ("capture") honey-password to divert returning attackers. The user will not be able to refuse (the only way would have been to opt-out before the attack happened), it will be explained that it is paramount not to use the old password again because this will be a trap. It is also explained that the old password is known and that the new password needs to be very different from the old one.

Whether the current user device is marked as "malicious" or not is also displayed, and the user is asked whether to allow-list the device in process block 851 (selected by default if the device is malicious, otherwise deselected). Allow-listing is suggested if the user connects from a regular device and location (e.g., from the office at home with a corporate device) and to not do it otherwise (e.g., connected behind a non-corporate anonymization proxy or from a hotel Wi-Fi). Display of the reset page is finalized in process block 852.

Returning to FIG. 8B, POST /reset is called once the GET /reset form is filled; it can also be called directly by a malicious program. If a cookie with the IDP attack flag is identified in decision block 853, the user is routed to the exhaustion honeypot in process block 854. The latter logs everything, enabling review of what password was provided.

In decision block 855, it is checked if the reset ID is valid. If not, like for GET /reset, the device and its cookie are marked as malicious in process block 856 and as an IDP attack in process block 857 before routing to the exhaustion honeypot in process block 858. Failed attempts are not offered as the POST should normally follow a GET /reset which already checked for the validity of the link.

If the reset ID is valid, it is assumed the request comes from the real owner of the user account. The password is assessed in decision block 859, and if a typo was entered in a password (wrong old password, or mismatch between new password and repeated new password), a corresponding error message is displayed in process block 860. Then, if the account was locked post-authentication, the old password is kept in process block 861 as a honey-password for the user to catch returning adversaries (which is explained to the user). If not, the old password is kept as a non-capture honeytoken just used to detect attacks.

If the user asked his device to be allow-listed, it is flagged as such in process block 862. It will open the door a little bit to adversaries having a similar fingerprint, but this is the price to pay to avoid locking the user repeatedly. The "malicious" flag attached to any cookie owned by the user is then removed in process block 863. This is done so that the user's other devices don't lock the user again as their cookie was marked as malicious upon attack detection. It won't open the door to the adversary, as at that point if they return they will enter the old user password and either be sent to the honeypot clone (if the password is a honey-password) or denied access (since it's the wrong password). If they keep the (now non-malicious) cookie and try to login as someone else, this will be detected, and the cookie will be marked malicious again. It is thus low risk to clean-up cookies at this point.

The reset link is removed from the database in process block 864 to prevent replay attacks, and before unlocking the user the current cookie is marked with a "grace period" flag valid for two weeks in process block 865. If, at this time, the user tries to login from the device having this very cookie with his old password, he is warned that he has since changed his password and should enter the new one. This is done only for the cookie attached to the password reset to avoid tipping-off adversaries while giving the user a chance to avoid being trapped because of muscle memory. The "password_reset" timestamp is updated in process block 866, and the user is unlocked in process block 867. The browser is then redirected to /login in process block 868 to let the user login with the new password.

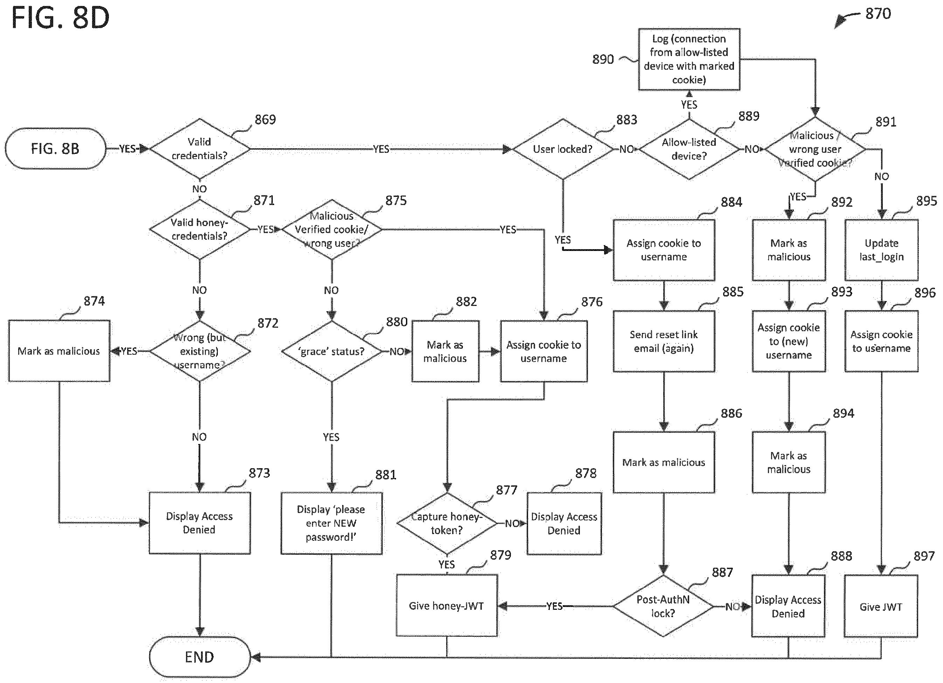

POST /login will check if valid credentials are entered in decision block 869 of fourth workflow portion 870 in FIG. 8D. If not, honey-credentials are checked for in decision block 871. Real credentials are checked first to avoid having accidentally configured the actual password of a user as a honey-credential. If this fails, it is determined in decision block 872 that it was simply the wrong password, either a typo or an ongoing brute-force attack - it cannot be determined which at this point, so an error message "access denied" is displayed in process block 873. On the chance that the cookie was already successfully used to login as someone else in the past, this is marked as an attack in process block 874 under the assumption that user accounts should never be shared.

If the user entered a honey-credential, an attacker is presumed, and the device and cookie will be marked malicious. If the Verified cookie belongs to the wrong user, as determined in decision block 875, the cookie is assigned to the username in process block 876. In decision block 877, it is determined if the honeytoken is set to capture. If not, the device and cookie are marked as malicious, and an access denied message is shown in process block 878. If yes, a honey-JWT token is assigned in process block 879, and the attacker is sent to the proxy with the honey-JWT which will in turn send him to the honeypot.

In decision block 880, it is determined if the Verified cookie is in "grace period." If yes, unless the cookie owner did something malicious since, the user who did the password reset is recognized and who nonetheless entered his old password. The user is warned accordingly in process block 881, where something like "please enter NEW password" is displayed. If the cookie is not in "grace period," it is marked as malicious in process block 882.

Now if the correct credentials are entered, a check is made in decision block 883 to see if the user is currently in "lock" status. If that's the case, then the account owner has received a password reset email. In the time between which he receives the email and actually resets his password, all logins are considered as malicious in nature. This allows capture of all adversaries and adversary tools that continue attempting to set up new sessions in the compromised user account. The cookie is assigned to the username in process block 884 to detect if the same cookie is later used to connect as someone else. A new email is sent in process block 885, as the previous one was maybe lost or overlooked by the user to give him a chance to realize what happens if he is the one trying to login, then the user's device and cookie are marked as malicious in process block 886. In decision block 887 it is determined if the user was locked pre- or post-authentication. If the user was locked pre-authentication, it is just pretended that the credentials are invalid and access is denied in process block 888. If the lock was post-authentication, a honey-JWT is assigned in process block 879, just as if a honey-credential was used.

If the user is not locked, the current Verified cookie is checked. If the device is determined to be allow listed in decision block 889, then the connection from the allow-listed device with the marked cookie is logged in process block 890. If it is marked as malicious, determined in decision block 891, the user is locked and the device is marked as malicious as well in process block 892. Since the adversary did not break into the account yet (otherwise the account would have been locked), this marking will lock any user the attacker may previously have connected as. Then the username is updated to the current one in process block 893, and the cookie is again marked malicious in process block 894.

This will trigger another lock, for the current username, in pre-authentication mode. So again, it is pretended that the password is incorrect, and access denied is displayed in process block 888. Note that when checking if the cookie is malicious, it is further checked who 'owns' it. Since a cookie is supposed to be bound to a single user, even if it is not explicitly marked as malicious, if the username of the owner does not match with the current username, this is considered an attack as well.

If the cookie is not malicious nor owned by another user, "last_login" is updated in process block 895, the cookie is assigned to the username in process block 896, and access is granted by sending the user to the proxy with a valid JWT in process block 897.

FIGS. 9-11 illustrate example database table structures that can be used to implement the examples described in FIGS. 1-8. Table structure 900 is a user table structure that includes fields such as "username," "password," "email," etc. The "locked" field is a BOOLEAN type that denies access to the user if true. "Capture_consent" is a BOOLEAN that allows the use of a honeypot (application clone) for the user. Table structure 900 also includes other information.

Table structure 902 is a passive fingerprint structure and includes a variety of information that can be gathered from a requesting computing device, including "ipaddress," "browser," "os," device_model," "cpu," and other information, including a "malicious" BOOLEAN field indicating whether the fingerprint is malicious. Table structure 904 is an active fingerprint table structure that includes the information found in the passive fingerprint structure as well as "language" and "display" fields which can be extracted from a requesting computing device through, for example, a FingerprintJS2.

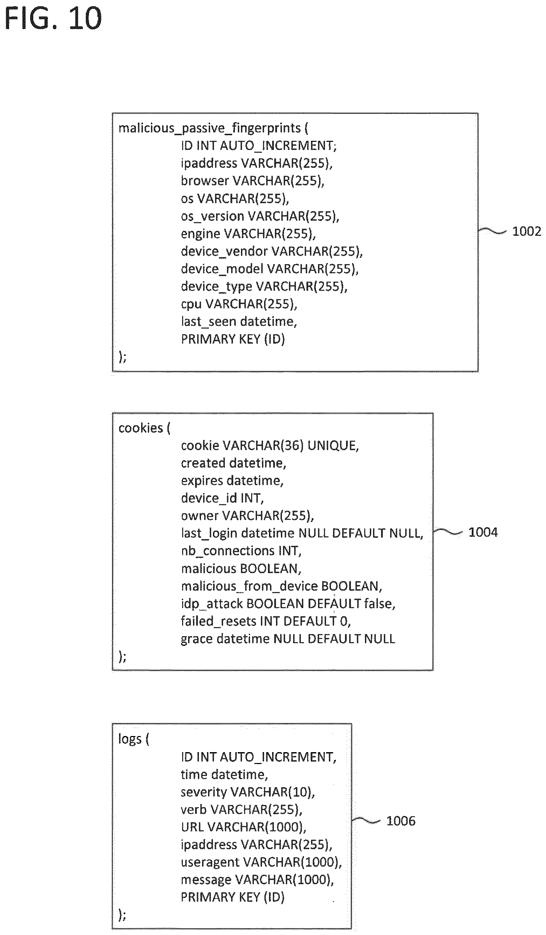

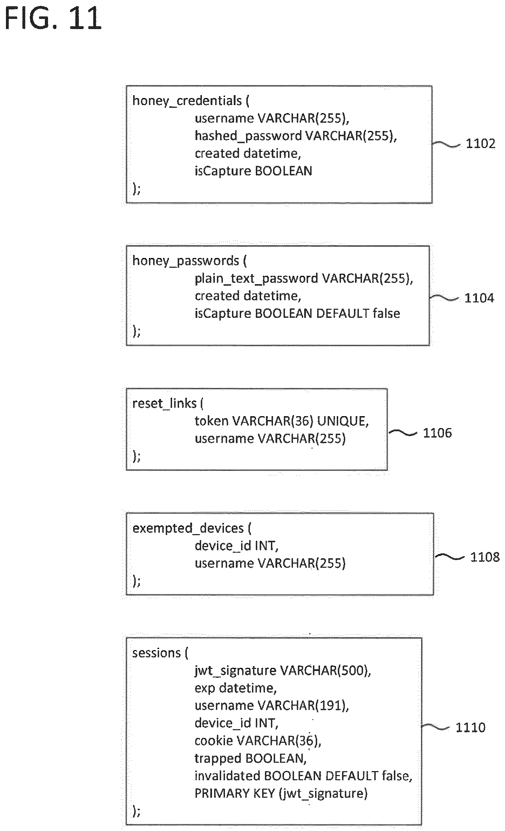

FIG. 10 illustrates a malicious passive fingerprint table structure somewhat similar to passive fingerprint table structure 902. FIG 10 also illustrates a cookie data table structure 1004 and a log data table structure 1006. FIG. 11 illustrates an example honey credentials data table structure 1102, honey passwords data table structure 1104, reset links data table structure 1106, exempted (allow-listed) devices data table structure 1108, and session token structure 1110.

### Example Computing Systems

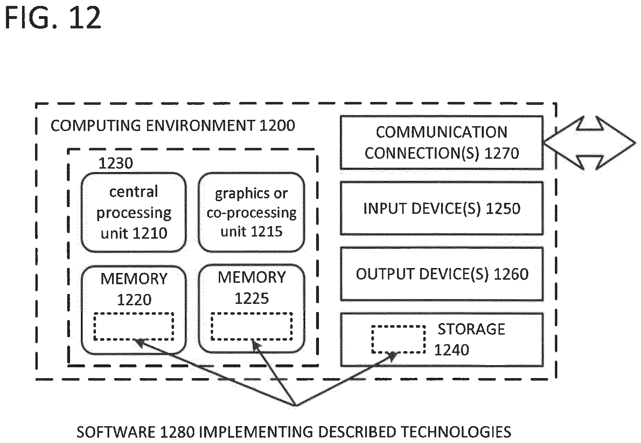

FIG. 12 depicts a generalized example of a suitable computing system 1200 in which the described innovations may be implemented. The computing system 1200 is not intended to suggest any limitation as to scope of use or functionality, as the innovations may be implemented in diverse general-purpose or special-purpose computing systems.

With reference to FIG. 12, the computing system 1200 includes one or more processing units 1210, 1215 and memory 1220, 1225. In FIG. 12, this basic configuration 1230 is included within a dashed line. The processing units 1210, 1215 execute computer-executable instructions. A processing unit can be a general-purpose central processing unit (CPU), processor in an application-specific integrated circuit (ASIC), or any other type of processor. In a multi-processing system, multiple processing units execute computer-executable instructions to increase processing power. For example, FIG. 12 shows a central processing unit 1210 as well as a graphics processing unit or co-processing unit 1215. The tangible memory 1220, 1225 may be volatile memory (e.g., registers, cache, RAM), nonvolatile memory (e.g., ROM, EEPROM, flash memory, etc.), or some combination of the two, accessible by the processing unit(s). The memory 1220, 1225 stores software 1280 implementing one or more innovations described herein, in the form of computer-executable instructions suitable for execution by the processing unit(s). For example, memory 1220 and 1225 can store reverse proxy 210, IDP 218, and device manager 220 of FIG. 2.

A computing system may have additional features. For example, the computing system 1200 includes storage 1240, one or more input devices 1250, one or more output devices 1260, and one or more communication connections 1270. An interconnection mechanism (not shown) such as a bus, controller, or network interconnects the components of the computing system 1200. Typically, operating system software (not shown) provides an operating environment for other software executing in the computing system 1200, and coordinates activities of the components of the computing system 1200.

The tangible storage 1240 may be removable or non-removable, and includes magnetic disks, magnetic tapes or cassettes, CD-ROMs, DVDs, or any other medium which can be used to store information and which can be accessed within the computing system 1200. The storage 1240 stores instructions for the software 1280 implementing one or more innovations described herein. For example, storage 1240 can store reverse proxy 210, IDP 218, and device manager 220 of FIG. 2.

The input device(s) 1250 may be a touch input device such as a keyboard, mouse, pen, or trackball, a voice input device, a scanning device, or another device that provides input to the computing system 1200. For video encoding, the input device(s) 1250 may be a camera, video card, TV tuner card, or similar device that accepts video input in analog or digital form, or a CD-ROM or CD-RW that reads video samples into the computing system 1200. The output device(s) 1260 may be a display, printer, speaker, CD-writer, or another device that provides output from the computing system 1200.

The communication connection(s) 1270 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

The terms "system" and "device" are used interchangeably herein. Unless the context clearly indicates otherwise, neither term implies any limitation on a type of computing system or computing device. In general, a computing system or computing device can be local or distributed, and can include any combination of special-purpose hardware and/or general-purpose hardware with software implementing the functionality described herein.

For the sake of presentation, the detailed description uses terms like "determine" and "use" to describe computer operations in a computing system. These terms are high-level abstractions for operations performed by a computer and should not be confused with acts performed by a human being. The actual computer operations corresponding to these terms vary depending on implementation.

### Example Implementations

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed methods can be used in conjunction with other methods.

Any of the disclosed methods can be implemented as computer-executable instructions or a computer program product stored on one or more computer-readable storage media and executed on a computing device (e.g., any available computing device, including smart phones or other mobile devices that include computing hardware). Computer-readable storage media are any available tangible media that can be accessed within a computing environment (e.g., one or more optical media discs such as DVD or CD, volatile memory components (such as DRAM or SRAM), or nonvolatile memory components (such as flash memory or hard drives)). By way of example and with reference to FIG. 12, computer-readable storage media include memory 1220 and 1225, and storage 1240. The term computer-readable storage media does not include signals and carrier waves. In addition, the term computer-readable storage media does not include communication connections (e.g., 1270).

Any of the computer-executable instructions for implementing the disclosed techniques as well as any data created and used during implementation of the disclosed embodiments can be stored on one or more computer-readable storage media. The computer-executable instructions can be part of, for example, a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network (such as a cloud computing network), or other such network) using one or more network computers.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C++, Java, Perl, JavaScript, Adobe Flash, or any other suitable programming language. Likewise, the disclosed technology is not limited to any particular computer or type of hardware. Certain details of suitable computers and hardware are well known and need not be set forth in detail in this disclosure.

Furthermore, any of the software-based embodiments (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, software applications, cable (including fiber optic cable), magnetic communications, electromagnetic communications (including RF, microwave, and infrared communications), electronic communications, or other such communication means.

The disclosed methods, apparatus, and systems should not be construed as limiting in any way. Instead, the present disclosure is directed toward all novel and nonobvious features and aspects of the various disclosed embodiments, alone and in various combinations and sub combinations with one another. The disclosed methods, apparatus, and systems are not limited to any specific aspect or feature or combination thereof, nor do the disclosed embodiments require that any one or more specific advantages be present or problems be solved.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology.

## Claims

1. A method for securing an application (208), the method comprising:
receiving a plurality of requests to access an application (208), where at least some of the requests are received from different requesting computing devices (206);
for the respective requests:
capturing information associated with the requesting computing device (206) and generating a passive fingerprint based on the captured information, wherein the passive fingerprint represents characteristics of the requester's computing device (206) that are provided with the request;
exchanging information with the requesting computing device (206) and generating an active fingerprint based on the exchanged information and the passive fingerprint, wherein the active fingerprint includes at least some or all of the information in the passive fingerprint and also includes information that the computing device (206) provides upon request;
generating a cookie; and
associating together and storing the passive fingerprint, active fingerprint, and the cookie; and
managing access to the application (208) based on one or more stored cookie, wherein managing access to the application (208) comprises
upon determining that an additional request includes a cookie having a value that matches a stored cookie, allowing access to the application (208) for the additional request;
upon determining that an additional request includes a cookie having a value that does not match any of the stored cookies, determining that the additional request is malicious;
flagging the cookie, a passive fingerprint associated with the additional request, and an active fingerprint associated with the additional request as malicious; and
denying access to the application (208) for the additional request, wherein managing access to the application (208) further comprises
upon receiving a second additional request including a cookie that has been flagged as malicious, denying access to the application (208) for the second additional request, and **characterized in that**
upon receiving a second additional request including a cookie that has not been flagged as malicious and the active and passive fingerprint have been flagged as malicious, allowing access to the application (208) for the second additional request.

2. The method of claim 1, wherein the passive fingerprint includes at least one of a source IP address, user agent information, operating system information, or processor information.

3. The method of claim 1 or 2, wherein the active fingerprint includes at least some information used to generate the passive fingerprint in addition to at least one of language or display information for the requesting computing device (206).

4. The method of any one of the preceding claims, wherein managing access to the application (208) comprises managing access to the application (208) based on one or more stored passive fingerprints or on one or more stored active fingerprints.

5. The method of any one of the preceding claims, wherein managing access to the application (208) comprises:
upon determining that the additional request includes valid credentials for an application user and upon determining that the additional request is malicious, locking the account of the application user,
optionally wherein managing access to the application (208) further comprises terminating or redirecting current application sessions associated with the locked application user.

6. The method of claim 5, wherein managing access to the application (208) further comprises not terminating or redirecting an allow-listed current application session associated with the locked application user; and/or
wherein redirecting a current application session comprises transferring the current application session to a cloned application session including at least some alternative data in place of data associated with the application session.

7. The method of claim 5 or 6, wherein denying access comprises establishing a cloned application session including at least some alternative data in place of data associated with an actual application session.

8. The method of any one of the preceding claims, wherein managing access to the application (208) comprises upon determining that a current application session associated with an application user is malicious based on user activity during the current session, flagging a cookie, a passive fingerprint, and an active fingerprint associated with the current application session as malicious,
optionally wherein managing access to the application (208) further comprises locking an account associated with the application user and redirecting or terminating other current application sessions associated with the application user.

9. The method of claim 8, wherein managing access to the application (208) further comprises upon receiving an additional request to access the application (208) having the passive fingerprint, active fingerprint, or cookie flagged as malicious but corresponding to a different application user's credentials, flagging the additional request as malicious and denying access to the application (208).

10. A system (200, 1200), comprising:
a processor (1210, 1215), and
one or more computer-readable storage media (1220, 1225, 1240) storing computer-readable instructions that, when executed by the processor (1210, 1215), perform operations comprising:
receiving a request from a computing device (206) to access an application (208), the request being associated with an account of an application user;
generating a passive fingerprint for the request based on information associated with the computing device (206) captured from the request, wherein the passive fingerprint represents characteristics of the requester's computing device (206) that are provided with the request;
generating an active fingerprint for the request based on the passive fingerprint and or additional information extracted from the computing device (206), wherein the active fingerprint includes at least some or all of the information in the passive fingerprint and also includes information that the computing device (206) provides upon request;
generating a cookie;
associating together and storing the passive fingerprint, active fingerprint, and cookie; and
managing access to the application (208) based on one or more stored cookie, wherein managing access to the application (208) comprises
upon determining that an additional request includes a cookie having a value that matches a stored cookie, allowing access to the application (208) for the additional request;
upon determining that an additional request includes a cookie having a value that does not match any of the stored cookies, determining that the additional request is malicious;
flagging the cookie, a passive fingerprint associated with the additional request, and an active fingerprint associated with the additional request as malicious; and
denying access to the application (208) for the additional request,
wherein managing access to the application (208) further comprises
upon receiving a second additional request including a cookie that has been flagged as malicious, denying access to the application (208) for the second additional request, and **characterized in that**
upon receiving a second additional request including a cookie that has not been flagged as malicious and the active and passive fingerprint have been flagged as malicious, allowing access to the application (208) for the second additional request.

11. The system (200, 1200) of claim 10, wherein the operations further comprise
comparing the passive fingerprint and active fingerprint to stored active and passive fingerprints for other requests corresponding to the application user and to other application users; and
terminating or redirecting current application sessions associated with the application user.

12. The system (200, 1200) of claim 10 or 11, wherein determining that the received request is malicious comprises determining that the passive or active fingerprints for the request are already associated with a different application user.

13. The system (200, 1200) of any one of claims 10 to 12, wherein determining that the received request is malicious comprises determining that the passive or active fingerprints for the request are already associated with a stored cookie and a different cookie is present in the request.

14. The system (200, 1200) of claim 11 in combination with any one of claims 12, or 13, wherein redirecting a current application session comprises transferring the current application session to a cloned application session including at least some alternative data in place of data associated with the application session.

15. One or more computer-readable storage media (1220, 1225, 1240) storing computer-executable instructions for securing an application (208) according to a method of any one of claims 1 to 9.

## Patentansprüche

1. Verfahren zum Sichern einer Anwendung (208), wobei das Verfahren umfasst:
Empfangen einer Mehrzahl von Anfragen zum Zugreifen auf eine Anwendung (208), wobei mindestens einige der Anfragen von verschiedenen anfragenden Rechenvorrichtungen (206) empfangen werden;
für die jeweiligen Anfragen:
Erfassen von Informationen, die mit der anfragenden Rechenvorrichtung (206) zusammenhängen, und Erzeugen eines passiven Fingerabdrucks auf der Basis der erfassten Informationen, wobei der passive Fingerabdruck Eigenschaften der Rechenvorrichtung des Anfragenden (206) repräsentiert, die mit der Anfrage bereitgestellt werden;
Austauschen von Informationen mit der anfragenden Rechenvorrichtung (206) und Erzeugen eines aktiven Fingerabdrucks auf der Basis der ausgetauschten Informationen und des passiven Fingerabdrucks, wobei der aktive Fingerabdruck mindestens einige oder alle der Informationen in dem passiven Fingerabdruck umfasst und auch Informationen umfasst, welche die Rechenvorrichtung (206) auf Anfrage bereitstellt;
Erzeugen eines Cookies; und
miteinander Verknüpfen und Speichern des passiven Fingerabdrucks, des aktiven Fingerabdrucks und des Cookies; und
Verwalten des Zugriffs auf die Anwendung (208) auf der Basis von einem oder mehreren gespeicherten Cookie(s), wobei das Verwalten des Zugriffs auf die Anwendung (208) umfasst:
nach dem Bestimmen, dass eine zusätzliche Anfrage ein Cookie mit einem Wert umfasst, der mit einem gespeicherten Cookie übereinstimmt, Erlauben des Zugriffs auf die Anwendung (208) für die zusätzliche Anfrage;
nach dem Bestimmen, dass eine zusätzliche Anfrage ein Cookie mit einem Wert umfasst, der nicht mit irgendeinem der gespeicherten Cookies übereinstimmt, Bestimmen, dass die zusätzliche Anfrage böswillig ist;
Kennzeichnen der Cookies, eines passiven Fingerabdrucks, der mit der zusätzlichen Anfrage zusammenhängt, und eines aktiven Fingerabdrucks, der mit der zusätzlichen Anfrage zusammenhängt, als böswillig; und
Verweigern des Zugriffs auf die Anwendung (208) für die zusätzliche Anfrage, wobei das Verwalten des Zugriffs auf die Anwendung (208) ferner
nach dem Empfangen einer zweiten zusätzlichen Anfrage, die ein Cookie umfasst, das als böswillig gekennzeichnet worden ist, das Verweigern des Zugriffs auf die Anwendung (208) für die zweite zusätzliche Anfrage umfasst, und **dadurch gekennzeichnet ist, dass**
nach dem Empfangen einer zweiten zusätzlichen Anfrage, die ein Cookie umfasst, das nicht als böswillig gekennzeichnet worden ist, und der aktive und der passive Fingerabdruck als böswillig gekennzeichnet worden sind, der Zugriff auf die Anwendung (208) für die zweite zusätzliche Anfrage erlaubt wird.

2. Verfahren nach Anspruch 1, wobei der passive Fingerabdruck mindestens eines von einer Quelle-IP-Adresse, Endsystemteilinformationen, Betriebssysteminformationen oder Prozessorinformationen umfasst.

3. Verfahren nach Anspruch 1 oder 2, wobei der aktive Fingerabdruck mindestens einige Informationen, die zum Erzeugen des passiven Fingerabdrucks verwendet werden, zusätzlich zu mindestens einer von Sprach- oder Anzeigeinformationen für die anfragende Rechenvorrichtung (206) umfasst.

4. Verfahren nach einem der vorhergehenden Ansprüche, wobei das Verwalten des Zugriffs auf die Anwendung (208) das Verwalten des Zugriffs auf die Anwendung (208) auf der Basis von einem oder mehreren gespeicherten passiven Fingerabdrücken oder einem oder mehreren gespeicherten aktiven Fingerabdrücken umfasst.

5. Verfahren nach einem der vorhergehenden Ansprüche, wobei das Verwalten des Zugriffs auf die Anwendung (208) umfasst:
nach dem Bestimmen, dass die zusätzliche Anfrage gültige Zugangsdaten für einen Anwendungsnutzer umfasst, und nach dem Bestimmen, dass die zusätzliche Anfrage böswillig ist, Sperren des Kontos des Anwendungsnutzers,
wobei das Verwalten des Zugriffs auf die Anwendung (208) gegebenenfalls ferner das Beenden oder Umleiten von gegenwärtigen Anwendungssitzungen, die mit dem gesperrten Anwendungsnutzer zusammenhängen, umfasst.

6. Verfahren nach Anspruch 5, wobei das Verwalten des Zugriffs auf die Anwendung (208) ferner das nicht Beenden oder Umleiten einer als erlaubt verzeichneten gegenwärtigen Anwendungssitzung, die mit dem gesperrten Anwendungsnutzer zusammenhängt, umfasst; und/oder
wobei das Umleiten einer gegenwärtigen Anwendungssitzung das Übertragen der gegenwärtigen Anwendungssitzung auf eine nachgebildete Anwendungssitzung umfasst, die mindestens einige alternative Daten anstelle von Daten umfasst, die mit der Anwendungssitzung zusammenhängen.

7. Verfahren nach Anspruch 5 oder 6, wobei das Verweigern des Zugriffs das Erstellen einer nachgebildeten Anwendungssitzung umfasst, die mindestens einige alternative Daten anstelle von Daten umfasst, die mit einer tatsächlichen Anwendungssitzung zusammenhängen.

8. Verfahren nach einem der vorhergehenden Ansprüche, wobei das Verwalten des Zugriffs auf die Anwendung (208) nach dem Bestimmen, dass eine gegenwärtige Anwendungssitzung, die mit einem Anwendungsnutzer zusammenhängt, böswillig ist, auf der Basis der Nutzeraktivität während der gegenwärtigen Sitzung das Kennzeichnen eines Cookies, eines passiven Fingerabdrucks und eines aktiven Fingerabdrucks, die mit der gegenwärtige Anwendungssitzung zusammenhängen, als böswillig umfasst,
wobei das Verwalten des Zugriffs auf die Anwendung (208) gegebenenfalls ferner das Sperren eines Kontos, das mit dem Anwendungsnutzer zusammenhängt, und das Umleiten oder Beenden von anderen gegenwärtigen Anwendungssitzungen, die mit dem Anwendungsnutzer zusammenhängen, umfasst.

9. Verfahren nach Anspruch 8, wobei das Verwalten des Zugriffs auf die Anwendung (208) ferner nach dem Empfangen einer zusätzlichen Anfrage zum Zugreifen auf die Anwendung (208) mit dem passiven Fingerabdruck, dem aktiven Fingerabdruck oder dem Cookie, die als böswillig gekennzeichnet sind, jedoch den Zugangsdaten eines anderen Anwendungsnutzers entsprechen, das Kennzeichnen der zusätzlichen Anfrage als böswillig und das Verweigern des Zugriffs auf die Anwendung (208) umfasst.

10. System (200, 1200), umfassend:
einen Prozessor (1210, 1215); und
ein oder mehrere computerlesbare(s) Speichermedium/medien (1220, 1225, 1240), das/die computerlesbare Anweisungen speichert/speichern, die, wenn sie durch den Prozessor (1210, 1215) ausgeführt werden, Vorgänge durchführen, umfassend:
Empfangen einer Anfrage von einer Rechenvorrichtung (206) zum Zugreifen auf eine Anwendung (208), wobei die Anfrage mit einem Konto eines Anwendungsnutzers verknüpft ist;
Erzeugen eines passiven Fingerabdrucks für die Anfrage auf der Basis von Informationen, die mit der Rechenvorrichtung (206) zusammenhängen und die von der Anfrage erfasst worden sind, wobei der passive Fingerabdruck Eigenschaften der Rechenvorrichtung des Anfragenden (206) repräsentiert, die mit der Anfrage bereitgestellt werden;
Erzeugen eines aktiven Fingerabdrucks für die Anfrage auf der Basis des passiven Fingerabdrucks und von zusätzlichen Informationen, die von der Rechenvorrichtung (206) entnommen worden sind, wobei der aktive Fingerabdruck mindestens einige oder alle der Informationen in dem passiven Fingerabdruck umfasst und auch Informationen umfasst, welche die Rechenvorrichtung (206) auf Anfrage bereitstellt;
Erzeugen eines Cookies; und
miteinander Verknüpfen und Speichern des passiven Fingerabdrucks, des aktiven Fingerabdrucks und des Cookies; und
Verwalten des Zugriffs auf die Anwendung (208) auf der Basis von einem oder mehreren gespeicherten Cookie(s), wobei das Verwalten des Zugriffs auf die Anwendung (208) umfasst:
nach dem Bestimmen, dass eine zusätzliche Anfrage ein Cookie mit einem Wert umfasst, der mit einem gespeicherten Cookie übereinstimmt, Erlauben des Zugriffs auf die Anwendung (208) für die zusätzliche Anfrage;
nach dem Bestimmen, dass eine zusätzliche Anfrage ein Cookie mit einem Wert umfasst, der nicht mit irgendeinem der gespeicherten Cookies übereinstimmt, Bestimmen, dass die zusätzliche Anfrage böswillig ist;
Kennzeichnen der Cookies, eines passiven Fingerabdrucks, der mit der zusätzlichen Anfrage zusammenhängt, und eines aktiven Fingerabdrucks, der mit der zusätzlichen Anfrage zusammenhängt, als böswillig; und
Verweigern des Zugriffs auf die Anwendung (208) für die zusätzliche Anfrage, wobei das Verwalten des Zugriffs auf die Anwendung (208) ferner
nach dem Empfangen einer zweiten zusätzlichen Anfrage, die ein Cookie umfasst, das als böswillig gekennzeichnet worden ist, das Verweigern des Zugriffs auf die Anwendung (208) für die zweite zusätzliche Anfrage umfasst, und **dadurch gekennzeichnet ist, dass**
nach dem Empfangen einer zweiten zusätzlichen Anfrage, die ein Cookie umfasst, das nicht als böswillig gekennzeichnet worden ist, und der aktive und der passive Fingerabdruck als böswillig gekennzeichnet worden sind, der Zugriff auf die Anwendung (208) für die zweite zusätzliche Anfrage erlaubt wird.

11. System (200, 1200) nach Anspruch 10, wobei die Vorgänge ferner
das Vergleichen des passiven Fingerabdrucks und des aktiven Fingerabdrucks mit gespeicherten aktiven und passiven Fingerabdrücken für andere Anfragen, die dem Anwendungsnutzer und anderen Anwendungsnutzern entsprechen; und
das Beenden oder Umleiten von gegenwärtigen Anwendungssitzungen, die mit dem Anwendungsnutzer zusammenhängen, umfassen.

12. System (200, 1200) nach Anspruch 10 oder 11, wobei das Bestimmen, dass die empfangene Anfrage böswillig ist, das Bestimmen umfasst, dass die passiven oder aktiven Fingerabdrücke für die Anfrage bereits mit einem anderen Anwendungsnutzer zusammenhängen.

13. System (200, 1200) nach einem der Ansprüche 10 bis 12, wobei das Bestimmen, dass die empfangene Anfrage böswillig ist, das Bestimmen umfasst, dass die passiven oder aktiven Fingerabdrücke für die Anfrage bereits mit einem gespeicherten Cookie zusammenhängen und in der Anfrage ein anderes Cookie vorliegt.

14. System (200, 1200) nach Anspruch 11 in einer Kombination mit einem der Ansprüche 12 oder 13, wobei das Umleiten einer gegenwärtigen Anwendungssitzung das Übertragen der gegenwärtigen Anwendungssitzung zu einer nachgebildeten Anwendungssitzung umfasst, die mindestens einige alternative Daten anstelle von Daten umfasst, die mit der Anwendungssitzung zusammenhängen.

15. Ein oder mehrere computerlesbare(s) Speichermedium/medien (1220, 1225, 1240), das/die computerausführbare Anweisungen zum Sichern einer Anwendung (208) gemäß einem Verfahren nach einem der Ansprüche 1 bis 9 umfasst/umfassen.

## Revendications

1. Un procédé de sécurisation d'une application (208), le procédé comprenant le fait de :
recevoir une pluralité de demandes d'accès à une application (208), sachant qu'au moins certaines des demandes sont reçues provenant de différents dispositifs informatiques demandeurs (206) ;
pour les demandes respectives :
capturer des informations associées au dispositif informatique demandeur (206) et générer une empreinte passive sur la base des informations capturées, sachant que l'empreinte passive représente des caractéristiques du dispositif informatique du demandeur (206) qui sont fournies avec la demande ;
échanger des informations avec le dispositif informatique demandeur (206) et générer une empreinte active sur la base des informations échangées et de l'empreinte passive, sachant que l'empreinte active inclut au moins certaines ou toutes les informations contenues dans l'empreinte passive et inclut également des informations que le dispositif informatique (206) fournit sur demande ;
générer un cookie ; et
associer ensemble et stocker l'empreinte passive, l'empreinte active et le cookie ; et de
gérer l'accès à l'application (208) sur la base d'un ou plusieurs cookies stockés, sachant que la gestion de l'accès à l'application (208) comprend le fait de
lorsqu'il est déterminé qu'une demande supplémentaire inclut un cookie présentant une valeur qui correspond à un cookie stocké, autoriser l'accès à l'application (208) pour la demande supplémentaire ;
lorsqu'il est déterminé qu'une demande supplémentaire inclut un cookie présentant une valeur qui ne correspond à aucun des cookies stockés, déterminer que la demande supplémentaire est malveillante ;
marquer (*flagging*) le cookie, une empreinte passive associée à la demande supplémentaire et une empreinte active associée à la demande supplémentaire comme malveillants ; et de
refuser l'accès à l'application (208) pour la demande supplémentaire,
sachant que la gestion de l'accès à l'application (208) comprend en outre les étapes consistant à :
lors de la réception d'une deuxième demande supplémentaire incluant un cookie qui a été marqué comme malveillant, refuser l'accès à l'application (208) pour la deuxième demande supplémentaire, et **caractérisé en ce que**
lors de la réception d'une deuxième demande supplémentaire incluant un cookie qui n'a pas été marqué comme malveillant et que l'empreinte digitale active et passive ont été marquées comme malveillantes, autoriser l'accès à l'application (208) pour la deuxième demande supplémentaire.

2. Le procédé d'après la revendication 1, sachant que l'empreinte passive inclut au moins l'une parmi une adresse IP source, des informations d'agent utilisateur, des informations concernant le système d'exploitation ou des informations de processeur.

3. Le procédé d'après la revendication 1 ou 2, sachant que l'empreinte active inclut au moins certaines informations utilisées pour générer l'empreinte passive en plus d'au moins une information parmi une information de langue ou une information d'affichage pour le dispositif informatique demandeur (206).

4. Le procédé d'après l'une quelconque des revendications précédentes, sachant que la gestion de l'accès à l'application (208) comprend le fait de gérer l'accès à l'application (208) sur la base d'une ou plusieurs empreintes passives stockées ou d'une ou plusieurs empreintes actives stockées.

5. Le procédé d'après l'une quelconque des revendications précédentes, sachant que la gestion de l'accès à l'application (208) comprend le fait de :
lorsqu'il est déterminé que la demande supplémentaire inclut des identifiants valides pour un utilisateur d'application, et lorsqu'il est déterminé que la demande supplémentaire est malveillante, verrouiller le compte de l'utilisateur d'application,
facultativement sachant que la gestion de l'accès à l'application (208) comprend en outre le fait de terminer ou de rediriger les sessions d'application actuelle associées à l'utilisateur d'application verrouillé.

6. Le procédé d'après la revendication 5, sachant que la gestion de l'accès à l'application (208) comprend en outre le fait de ne pas terminer ou rediriger une session d'application actuelle sur liste d'autorisation associée à l'utilisateur d'application verrouillé ; et/ou
sachant que la redirection d'une session d'application actuelle comprend le fait de transférer la session d'application actuelle vers une session d'application clonée incluant au moins certaines données alternatives à la place des données associées à la session d'application.

7. Le procédé d'après la revendication 5 ou 6, sachant que le fait de refuser l'accès comprend le fait d'établir une session d'application clonée incluant au moins certaines données alternatives à la place des données associées à une session d'application réelle (*actual*)*.*

8. Le procédé d'après l'une quelconque des revendications précédentes, sachant que la gestion de l'accès à l'application (208) comprend, lors de la détermination qu'une session d'application actuelle associée à un utilisateur d'application est malveillante sur la base d'une activité de l'utilisateur pendant la session actuelle, le fait de marquer un cookie, une empreinte passive et une empreinte active associés à la session d'application actuelle comme malveillants,
facultativement, sachant que la gestion de l'accès à l'application (208) comprend en outre le fait de verrouiller un compte associé à l'utilisateur d'application et de rediriger ou de terminer d'autres sessions d'application actuelle associées à l'utilisateur d'application.

9. Le procédé d'après la revendication 8, sachant que la gestion de l'accès à l'application (208) comprend en outre, lors de la réception d'une demande supplémentaire d'accès à l'application (208) présentant l'empreinte passive, l'empreinte active ou le cookie signalés comme malveillants mais correspondant aux identifiants d'utilisateur d'application différent, le fait de marquer la demande supplémentaire comme malveillante et de refuser l'accès à l'application (208).

10. Un système (200, 1200) comprenant :
un processeur (1210, 1215) ; et
un ou plusieurs supports de stockage lisibles par ordinateur (1220, 1225, 1240) stockant des instructions lisibles par ordinateur qui, lorsqu'elles sont exécutées par le processeur (1210, 1215), effectuent des opérations comprenant le fait de :
recevoir une demande provenant d'un dispositif informatique (206) pour accéder à une application (208), la demande étant associée à un compte d'un utilisateur de l'application ;
générer une empreinte passive pour la demande sur la base d'informations associées au dispositif informatique (206) capturées à partir de la demande, sachant que l'empreinte passive représente des caractéristiques du dispositif informatique (206) du demandeur qui sont fournies avec la demande ;
générer une empreinte active pour la demande sur la base de l'empreinte passive et d'informations supplémentaires extraites du dispositif informatique (206), sachant que l'empreinte active inclut au moins certaines ou toutes les informations contenues dans l'empreinte passive et inclut également des informations que le dispositif informatique (206) fournit sur demande ;
générer un cookie ;
associer et stocker l'empreinte passive, l'empreinte active et le cookie ; et de
gérer l'accès à l'application (208) sur la base d'un ou plusieurs cookies stockés, sachant que la gestion de l'accès à l'application (208) comprend le fait de
lorsqu'il est déterminé qu'une demande supplémentaire inclut un cookie présentant une valeur qui correspond à un cookie stocké, autoriser l'accès à l'application (208) pour la demande supplémentaire ;
lorsqu'il est déterminé qu'une demande supplémentaire inclut un cookie présentant une valeur qui ne correspond à aucun des cookies stockés, déterminer que la demande supplémentaire est malveillante ;
marquer le cookie, une empreinte passive associée à la demande supplémentaire et une empreinte active associée à la demande supplémentaire comme malveillants ; et de
refuser l'accès à l'application (208) pour la demande supplémentaire,
sachant que la gestion de l'accès à l'application (208) comprend en outre,
lors de la réception d'une deuxième demande supplémentaire incluant un cookie qui a été marqué comme malveillant, refuser l'accès à l'application (208) pour la deuxième demande supplémentaire, et **caractérisé en ce que**
lors de la réception d'une deuxième demande supplémentaire incluant un cookie qui n'a pas été marqué comme malveillant et que l'empreinte active et passive ont été marquées comme malveillantes, autoriser l'accès à l'application (208) pour la deuxième demande supplémentaire.

11. Le système (200, 1200) d'après la revendication 10, sachant que les opérations comprennent en outre le fait de
comparer l'empreinte passive et l'empreinte active aux empreintes actives et passives stockées pour d'autres demandes correspondant à l'utilisateur d'application et à d'autres utilisateurs d'application ; et de
terminer ou rediriger les sessions d'application actuelles associées à l'utilisateur d'application.

12. Le système (200, 1200) d'après la revendication 10 ou 11, sachant que le fait de déterminer que la demande reçue est malveillante comprend le fait de déterminer que les empreintes passives ou actives pour la demande sont déjà associées à un utilisateur d'application différent.

13. Le système (200, 1200) d'après l'une quelconque des revendications de 10 à 12, sachant que le fait de déterminer la demande reçue est malveillante comprend le fait de déterminer que les empreintes passives ou actives pour la demande sont déjà associées à un cookie stocké et qu'un cookie différent est présent dans la demande.

14. Le système (200, 1200) d'après la revendication 11 en combinaison avec l'une quelconque des revendications 12 ou 13, sachant que la redirection d'une session d'application actuelle comprend le fait de transférer la session d'application actuelle vers une session d'application clonée incluant au moins certaines données alternatives à la place des données associées à la session d'application.

15. Un ou plusieurs supports de stockage lisibles par ordinateur (1220, 1225, 1240) stockant des instructions exécutables par ordinateur pour sécuriser une application (208) conformément à un procédé d'après l'une quelconque des revendications de 1 à 9.
